# FASCICULE DE BREVET EUROPEEN

(11) **EP 1 630 448 B1**
(45) Date de publication et mention de la délivrance du brevet: **15.10.2008**
(21) Numéro de dépôt: 05291763.0
(22) Date de dépôt: 22.08.2005
(51) Int. Cl.: F16F 7/12

(54) **Elément d'amortissement de choc pour véhicule et chassis correspondant**
Schockabsorbierendes Element für ein Fahrzeug und ein dazugehörendes Chassis
Shock absorbing element for a vehicle and corresponding chassis

(30) Priorité: 30.08.2004 FR 0409196
(43) Date de publication de la demande: 01.03.2006
(73) Titulaire: Wagon Automotive S.A., 78306 Poissy (FR)
(72) Inventeur: Trancart, Olivier, 78790 Courgent (FR)
(74) Mandataire: Jacobson, Claude

(56) Documents cités:
- EP-A- 1 223 095
- GB-A- 2 278 580
- US-A- 6 106 039
- US-A1- 2003 057 318

## Description

La présente invention concerne un élément d'amortissement de choc pour véhicule, du type indiqué dans le préambule de la revendication 1.

Un tel élément est connu du document US 2003/57318.

D'autres éléments d'amortissement de choc sont connus des documents US-A-6 106 039 et GB-A-2 278 580.

On connaît des éléments de structure montés sur des châssis de véhicules automobiles. De tels éléments sont par exemple des éléments de rallonge montés entre des longerons de châssis et une barre de pare-chocs. Ces éléments doivent présenter un comportement de déformation défini lors d'un choc, ainsi qu'une haute capacité d'absorption d'énergie pour une déformation donnée.

La présente invention a pour but de fournir un élément de structure qui présente de tels propriétés.

A cet effet l'invention a pour objet un élément du type précité, caractérisé par les caractéristiques de la revendication 1.

Selon des modes particuliers de réalisation, l'invention comporte l'une ou plusieurs des caractéristiques indiquées dans les revendications dépendantes 2 à6.

L'invention a en outre pour objet un châssis de véhicule, selon la revendication 7.

L'invention sera mieux comprise à la lecture de la description qui va suivre, donnée uniquement à titre d'exemple et faite en se référant aux dessins annexés, sur lesquels :
- la Figure 1 est une vue éclatée en perspective d'un élément d'amortissement selon l'invention;
- les Figures 2A à 2D sont des vues de quatre différents côtés de l'élément selon l'invention, la Figure 2D étant une vue en coupe longitudinale partiellement arrachée; et
- la Figure 3 est une vue en coupe suivant la ligne III-III de la Figure 2B.

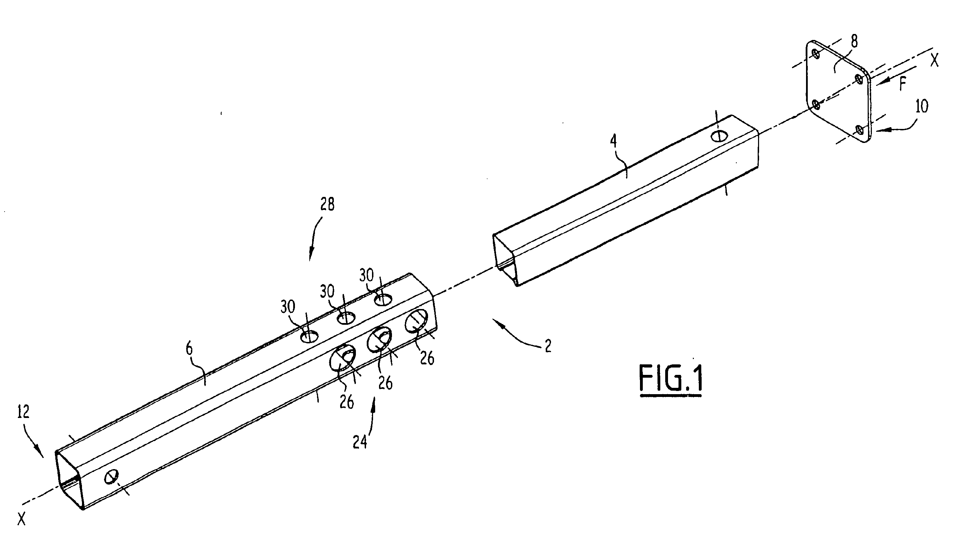

Sur la Figure 1 est représenté un élément d'amortissement de choc d'un véhicule automobile, désigné par la référence générale 2.

L'élément 2 comprend une barre intérieure 4, une barre extérieure 6 ainsi qu'une bride de liaison 8. La barre intérieure 4 comporte une extrémité proximale 10 de l'élément, sur laquelle est fixée la bride de liaison 8. A l'état monté, une barre de pare-chocs non représentée est fixée à la bride 8. La barre extérieure 6 comporte une extrémité distale 12 fixée par exemple à un longeron non représenté d'un châssis d'un véhicule.

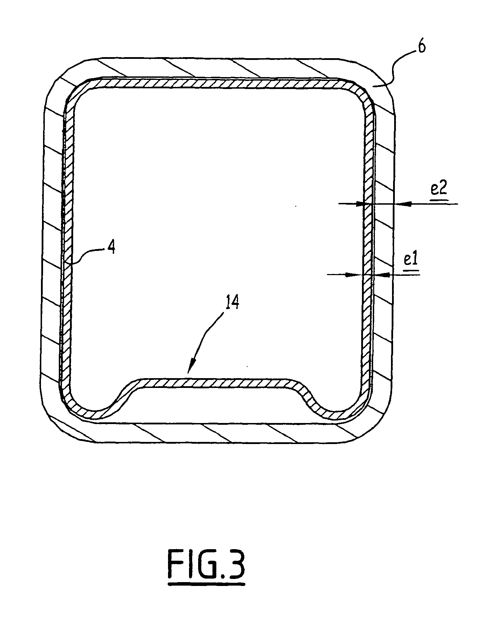

Les deux barres 4, 6 sont des profilés extrudés d'axe X-X, dont la section transversale est creuse et identique sur toute la longueur axiale respective. Comme il ressort de la Figure 3, les sections transversales sont sensiblement en forme de quadrilatère, en l'espèce de forme carrée. Le contour extérieur de la barre intérieure 4 est sensiblement conjugué du contour intérieur de la barre extérieure 6. Une partie centrale 14 d'une face de la section transversale de la barre intérieure 4 est en retrait par rapport à la surface de la barre extérieure 6. L'épaisseur de matière e1 de la barre intérieure 4 est inférieure à l'épaisseur de matière e2 de la barre extérieure 6.

Les deux barres 4, 6 sont en métal, de préférence en acier.

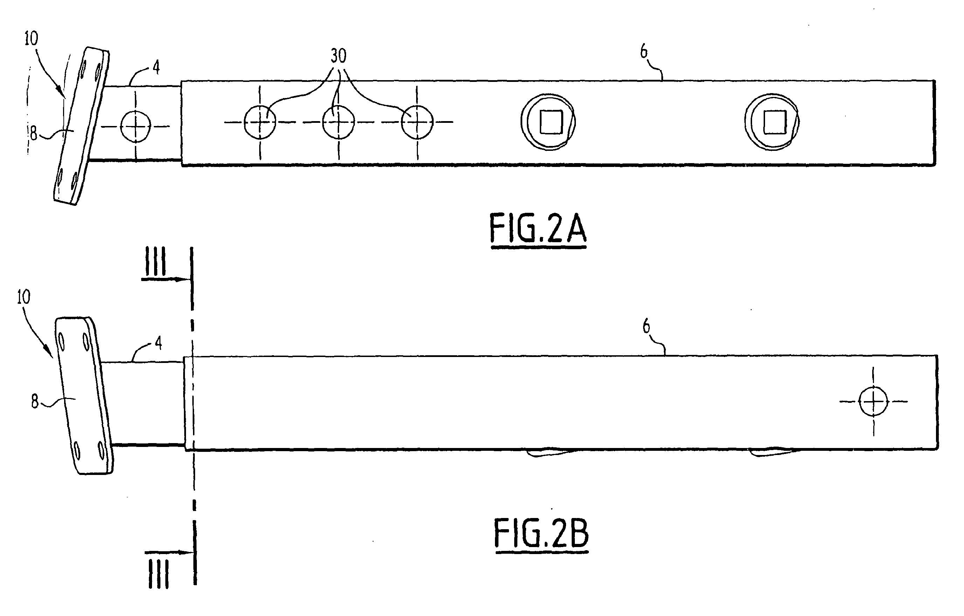

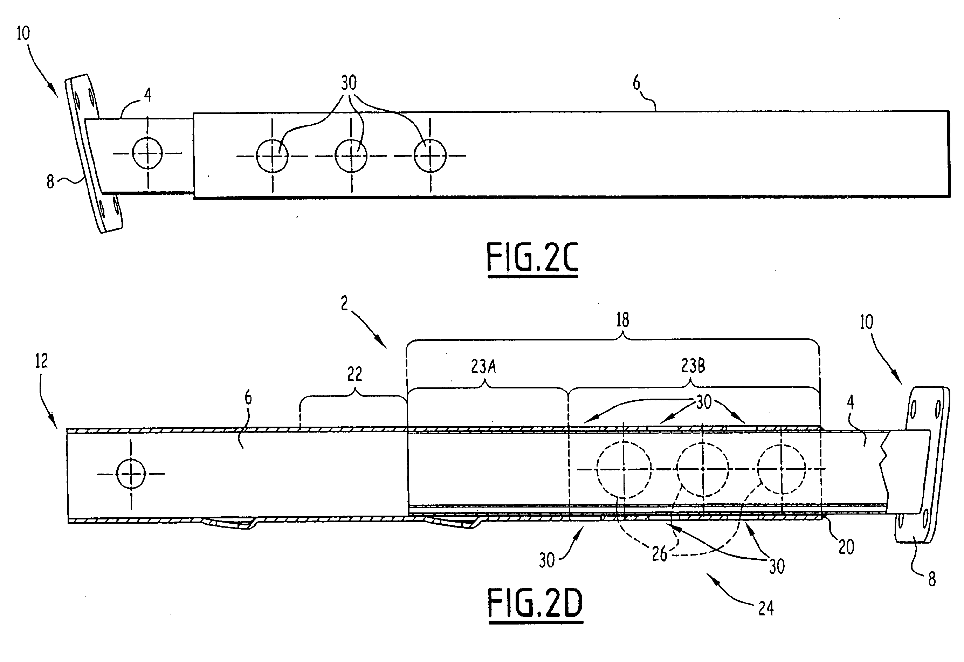

Les deux barres 4, 6 sont emboîtées l'une dans l'autre sur une partie de leur longueur axiale en formant une zone de chevauchement 18 (voir Figure 2D).

Les deux barres 4, 6 sont fixées localement l'une à l'autre par un cordon de soudure 20 situé à l'extrémité proximale de la barre extérieure 6 et dans la partie courante de la barre intérieure 4. La zone de chevauchement 18 située du côté distal du cordon de soudure 20 est dépourvue de moyens de fixation des deux barres l'une à l'autre. De plus, au moins la partie de la barre extérieure 6 adjacente à la zone de chevauchement 18 comprend une section libre identique à la section transversale de la barre intérieure 4. Elle forme une zone de déplacement 22 de la barre intérieure 4 par rapport à la barre extérieure 6.

En d'autres termes, en l'absence du cordon de soudure 20, les deux barres 4, 6 sont axialement mobiles en coulissement l'une par rapport à l'autre.

La barre 4, au moins dans la zone de chevauchement 18, est dépourvue de zones d'affaiblissement, telle que des ouvertures.

La barre extérieure 6 comporte un tronçon de guidage 23A adjacent à la zone de déplacement 22 et un tronçon affaibli 23B, situé entre le tronçon de guidage 23A et le cordon de soudure 20.

Le tronçon affaibli 23B a une rigidité inférieure au tronçon de guidage 23A. En d'autres termes, la force de compression axiale du tronçon 23B est inférieure à celle du tronçon 23A. A cet effet, le tronçon affaibli 23B comprend une rangée principale 24 d'ouvertures d'affaiblissement 26 ainsi que deux rangées 28 secondaires d'ouvertures d'affaiblissement 30. Ces rangées 24, 28 s'étendent axialement exclusivement à l'intérieur de la zone de chevauchement 18.

Chaque rangée 24, 28 est disposée sur une face de la barre 6, les rangées secondaires 28 étant disposées sur les deux faces adjacentes à la face de la rangée principale 24, en vis-à-vis l'une de l'autre. La quatrième face de la barre est pleine et dépourvue d'ouvertures, de telle sorte que lors d'un choc, la barre intérieure 4 est déviée selon une direction opposée de cette face. La barre comporte donc une direction de déformation prédéfinie.

En l'occurrence, toutes les ouvertures 26, 30 sont des ouvertures traversantes circulaires, mais elles peuvent avoir d'autres formes.

Les ouvertures 26 et 30 peuvent avoir une forme ovale, carrée ou rectangulaire.

La rangée principale 24 comporte des ouvertures 26 dont la taille augmente progressivement du côté proximal vers le côté distal.

Les ouvertures 30 des rangées secondaires 28 ont des tailles identiques, en l'occurrence de diamètres identiques et les ouvertures 30 des deux rangées 28 sont alignées axialement.

Par ailleurs, les ouvertures 30 sont décalées axialement des ouvertures 26, en l'occurrence d'une demi-distance axiale de deux ouvertures 26 adjacentes.

Le comportement de l'élément de structure 2 selon l'invention lors d'un choc est comme suit.

Lorsqu'une force axiale F, dirigée vers le côté distale, est exercée sur la bride 8, la barre intérieure 4 se déplace par rapport à la barre extérieure 6, pendant que la partie munie d'ouvertures de la barre 6 se déforme successivement à la façon d'un accordéon. Pendant cette déformation, l'extrémité distale de la barre intérieure 4 est guidée axialement dans la barre 6.

Grâce à la zone de chevauchement 18 et à la position de la soudure 20, la déformation de l'élément 2 est sensiblement axiale et non pas dirigée latéralement ce qui conduit à une haute capacité d'absorption d'énergie. Par ailleurs, grâce à la présence des ouvertures 26, 30, c'est la partie comportant des ouvertures qui est déformée, et non pas une autre partie de l'élément de structure.

En variante, la barre intérieure 4 comporte le tronçon affaibli 23B et le tronçon de guidage 23A, tandis que la barre extérieure 6 est rigide sur toute sa longueur. Dans ce cas, la soudure 20 est située à l'extrémité distale de la barre intérieure 4 et le tronçon affaibli 23B est situé entre la soudure 20 et le tronçon de guidage 23A.

Grâce au fait que l'épaisseur e1 de la barre 4 soit inférieure à l'épaisseur e2 de la barre 6, après déformation complète du tronçon affaibli 23B, c'est la partie de la barre 4 s'étendant en dehors de la barre 6 qui est déformée. Ainsi, l'élément 2 a un comportement de déformation prédéterminé.

## Revendications

1. Elément d'amortissement de choc pour véhicule, du type comportant une première barre (4), comprenant une seconde barre (6) chevauchant la première barre (4) dans une zone de chevauchement (18), les deux barres (4, 6) étant fixées l'une à l'autre exclusivement à un emplacement de fixation (20) situé dans la zone de chevauchement (18), la seconde barre (6) formant un tronçon affaibli (23B) comprimable axialement et un tronçon de guidage (23A) situés dans la zone de chevauchement (18), le tronçon affaibli (23B) comportant au moins un évidement d'affaiblissement (26, 30) dans la zone de chevauchement (18), **caractérisé en ce que** l'au moins un évidement d'affaiblissement comporte au moins deux rangées d'ouvertures s'étendant dans le sens axial (X-X) des barres, et **en ce que** les ouvertures (26, 30) d'une rangée (24, 28) sont décalées axialement des ouvertures (30, 26) de l'autre rangée (28, 24).

2. Elément selon la revendication 1, **caractérisé en ce que** le tronçon affaibli (23B) est situé entre l'emplacement de fixation (20) et le tronçon de guidage (23A).

3. Elément selon l'une quelconque des revendications 1 ou 2, **caractérisé en ce que** la seconde barre (6) comprend au moins deux évidements d'affaiblissement (26) de tailles différentes.

4. Elément selon la revendication 3, **caractérisé en ce que** les évidements d'affaiblissement (26) ont des tailles croissantes dans le sens dirigé vers l'emplacement de fixation (20).

5. Elément selon l'une des revendications 1 à 3, **caractérisé en ce que** la première barre est une barre intérieure (4) formant une extrémité proximale (10) de l'élément et adaptée pour être fixée à une première partie du véhicule, **en ce que** la seconde barre est une barre extérieure (6) formant une extrémité distale (12) de l'élément destinée à être fixée à une seconde partie du véhicule, **en ce que** l'emplacement de fixation (20) est espacé de l'extrémité distale de la zone de chevauchement (18), et **en ce que** la barre extérieure (6) délimite une zone de déplacement (22) de la barre intérieure (4) dans la barre extérieure (6), la zone de déplacement (22) se raccordant à l'extrémité distale de la zone de chevauchement (18).

6. Elément selon l'une quelconque des revendications 1 à 4, **caractérisé en ce que** la seconde barre (6) est un profilé creux à section fermé.

7. Elément selon l'une quelconque des revendications 1 à 5, **caractérisé en ce que** la première barre (4) est un profilé creux à section fermée.

8. Châssis de véhicule, comportant deux parties, reliés par au moins un élément de structure (2), **caractérisé en ce que** l'élément est un élément d'amortissement de choc selon l'une des revendications précédentes.

## Claims

1. Shock absorption element for a vehicle, of the type comprising a first bar (4), comprising a second bar (6) overlapping the first bar (4) in an overlap zone (18), the two bars (4 and 6) being fastened to each other exclusively at a fastening location (20) situated in the overlap zone (18), the second bar (6) forming an axially compressible weakened section (23B) and a guiding section (23A), both situated in the overlap zone (18), the weakened section (23B) comprising at least one weakening cavity (26 and 30) in the overlap zone (18), **characterized in that** the at least one weakening cavity comprises at least two rows of openings running in the axial direction (X-X) of the bars, and **in that** the openings (26 and 30) of one row (24 and 28) are axially offset from the openings (30 and 26) of the other row (28 and 24).

2. Element according to Claim 1, **characterized in that** the weakened section (23B) is situated between the fastening location (20) and the guiding section (23A).

3. Element according to either of Claims 1 and 2, **characterized in that** the second bar (6) comprises at least two weakening cavities (26) of different sizes.

4. Element according to Claim 3, **characterized in that** the weakening cavities (26) are of sizes increasing in the direction towards the fastening location (20).

5. Element according to any one of Claims 1 to 3, **characterized in that** the first bar is an internal bar (4) forming a proximal end (10) of the element and adapted to be fastened to a first part of the vehicle, **in that** the second bar is an external bar (6) forming a distal end (12) of the element intended to be fastened to a second part of the vehicle, **in that** the fastening location (20) is spaced apart from the distal end of the overlap zone (18), and **in that** the external bar (6) defines a zone of displacement (22) of the internal bar (4) in the external bar (6), the displacement zone (22) connecting to the distal end of the overlap zone (18).

6. Element according to any one of Claims 1 to 4, **characterized in that** the second bar (6) is a closed hollow section.

7. Element according to any one of Claims 1 to 5, **characterized in that** the first bar (4) is a closed hollow section.

8. Vehicle chassis, comprising two parts, connected by at least one structural element (2), **characterized in that** the element is a shock absorption element according to any one of the preceding claims.

## Patentansprüche

1. Stoßdämpfungselement für ein Fahrzeug einer Art, welche einen ersten Stab (4), einen zweiten Stab (6), der den ersten Stab (4) in einer Übergreifzone (18) übergreift, aufweist, wobei die beiden Stäbe (4, 6) ausschließlich an einer Befestigungsstelle (20) an einander befestigt sind, die in der Übergreifzone (18) liegt, wobei der zweite Stab (6) einen geschwächten Abschnitt (23B), der axial zusammendrückbar ist, und einen Führungsabschnitt (23A), der in der Übergreifzone (18) liegt, ausbildet, wobei der geschwächte Abschnitt (23B) wenigstens eine Schwächungsausnehmung (26, 30) in der Übergreifzone (18) aufweist, **dadurch gekennzeichnet, dass** die wenigstens eine Schwächungsausnehmung wenigstens zwei Öffnungsreihen aufweist, die sich in Axialrichtung (X-X) der Stäbe erstrecken, und dass die Öffnungen (26, 30) der einen Reihe (24, 28) gegenüber den Öffnungen (30, 26) der anderen Reihe (28, 24) axial versetzt sind.

2. Element nach Anspruch 1, **dadurch gekennzeichnet, dass** der geschwächte Abschnitt (23B) zwischen der Befestigungsstelle (20) und dem Führungsabschnitt (23A) liegt.

3. Element nach einem der Ansprüche 1 oder 2, **dadurch gekennzeichnet, dass** der zweite Stab (6) wenigstens zwei Schwächungsausnehmungen (26) unterschiedlicher Größe aufweist.

4. Element nach Anspruch 3, **dadurch gekennzeichnet, dass** die Schwächungsausnehmungen (26) mit in Richtung zur Befestigungsstelle (20) zunehmender Größe ausgebildet sind.

5. Element nach einem der Ansprüche 1 bis 3, **dadurch gekennzeichnet, dass** der erste Stab ein innerer Stab (4) ist, der ein nahe gelegenes Ende (10) des Elements bildet, das für eine Befestigung an einem ersten Teil des Fahrzeugs eingerichtet ist, dass der zweite Stab ein äußerer Stab (6) ist, der ein entfernt gelegenes Ende (12) des Elements bildet, das für eine Befestigung an einem zweiten Teil des Fahrzeugs eingerichtet ist, dass die Befestigungsstelle (20) vom entfernt gelegenen Ende der Übergreifzone (18) im Abstand liegt, und dass der äußere Stab (6) eine Versetzungszone (22) des inneren Stabs (4) im äußeren Stab (6) bestimmt, wobei die Versetzungszone (22) sich an das entfernt gelegene Ende der Übergreifzone (18) anschließt.

6. Element nach einem der Ansprüche 1 bis 4, **dadurch gekennzeichnet, dass** der zweite Stab (6) ein Hohlprofil mit geschlossenem Querschnitt ist.

7. Element nach einem der Ansprüche 1 bis 5, **dadurch gekennzeichnet, dass** der erste Stab (4) ein Hohlprofil mit geschlossenem Querschnitt ist.

8. Fahrzeugaufbau, welcher zwei Teile aufweist, die durch wenigstens ein Konstruktionselement (2) verbunden sind, **dadurch gekennzeichnet, dass** das Element ein Stoßdämpfungselement gemäß einem der vorstehenden Ansprüche ist.
